# EUROPEAN PATENT APPLICATION

(11) **EP 4 773 020 A1**
(43) Date of publication of application: **08.07.2026**
(21) Application number: 25226312.4
(22) Date of filing: 22.12.2025
(51) Int. Cl.: G06F 16/901

(54) **METHOD AND DEVICE FOR DATA MIGRATION OF BLOCKCHAIN**

(30) Priority: 02.01.2025 CN 202510002836
(71) Applicant: Hangzhou High-tech Zone (Binjiang) Institute of Blockchain and Data Security, Hangzhou City, Zhejiang Province 310051 (CN)
(72) Inventor: DUAN, Hao, Hangzhou City, 310051 (CN); LI, Xiaojing, Hangzhou City, 310051 (CN); ZHANG, Shuai, Hangzhou City, 310051 (CN); LIN, Yangping, Hangzhou City, 310051 (CN); YANG, Cuihua, Hangzhou City, 310051 (CN); SUN, Yang, Hangzhou City, 310051 (CN); YUAN, Chao, Hangzhou City, 310051 (CN); SHENG, Weifeng, Hangzhou City, 310051 (CN)
(74) Representative: Laine IP Oy

(57) **Abstract**

The present application applies to the field of blockchain technology and provides a method and a device for data migration of a blockchain . The method includes: generating a state tree based on state data of accounts in the blockchain, in which the state tree is a B+ tree based on a copy-on-write technology, and each leaf node of the state tree is configured to store the state data; determining a target state tree to be migrated from the generated state tree when data migration is triggered; sending state data of the target state tree to an extended node of a master node; if migration completion information is received from the extended node, updating a data mapping table stored in the master node, in which the data mapping table is configured to represent a mapping relationship between state data stored in the extended node and the extended node; and deleting the target state tree in the master node. Through this method, state data migration can be achieved, thereby reducing the storage pressure on the master node device of the blockchain, while maintaining high data consistency during the data migration process.

## Description

### TECHNICAL FIELD

The present application relates to the technical field of a blockchain technology, and more particularly to a method for data migration of a blockchain.

### BACKGROUND

The continuous growth of data on the blockchain has brought enormous storage pressure to the blockchain system. In order to reduce the storage pressure on the blockchain, the migration of the blockchain data can be performed.

State data in the account model has high correlation and dependency. In existing solutions for data migration of the blockchain, existing state data storage schemes mostly sort account addresses in a lexicographical order. Although this sorting method is suitable for fast queries, it cannot segment data according to the time dimension, making it difficult to meet dynamic migration requirements. For example, when migrating by block or transaction time dimension, the byte order is inconsistent with the chronological order, which results in complex data segmentation logic and poor performance.

### SUMMARY

In view of this, embodiments of the present application provide a method for data migration of a blockchain to improve the data migration efficiency of the blockchain, thereby reducing the storage pressure on a node device in the blockchain, while ensuring high consistency during the data migration process.

A first aspect of the present application provides a method for data migration of a blockchain, applied to a master node device of a blockchain. The method includes:
generating a state tree based on state data of accounts in the blockchain, in which the state tree is a B+ tree based on a copy-on-write technology, and each leaf node of the state tree is configured to store the state data;
determining a target state tree to be migrated from the generated state tree when data migration is triggered;
sending state data of the target state tree to an extended node of a master node;
if migration completion information is received from the extended node, updating a data mapping table stored in the master node, in which the data mapping table is configured to represent a mapping relationship between state data stored in the extended node and the extended node; and
deleting the target state tree in the master node;
in which, generating the state tree based on the state data of the accounts in the blockchain includes:
segmenting the state data in the blockchain according to a preset time interval; and
generating one state tree based on the state data within one time interval, each state tree is organized in a chronological order, and the state tree is a multi-version Merkle tree organized based on a time structure.

In one possible implementation, one or more of the extended nodes are registered in the master node, and each extended node has a corresponding global Bloom filter in the master node, and the method further includes:
receiving the global Bloom filter from the extended node;
in response to a query request, determining a target extended node where the target state data is located based on one or more of the global Bloom filters in the master node, wherein the target state data is state data corresponding to the query request;
sending the query request to the target extended node to request the target state data from the extended node; and
determining the target state data based on data returned by the target extended node.

In one possible implementation, determining the target state data based on the data returned by the target extended node includes:
determining time information corresponding to each piece of data returned by the target extended node; and
determining data with a latest time as the target state data based on the time information.
In one possible implementation, determining the time information corresponding to each piece of data returned by the target extended node includes:
determining a first state tree corresponding to the data returned by the target extended node;
determining a block range corresponding to the first state tree from the data mapping table, in which the block range is represented by block numbers generated in a chronological order; and
taking the block range as the time information corresponding to the data returned by the target extended node.

In one possible implementation, before sending the target state tree to the extended nodes of the master node, the method further includes:
determining whether the master node is currently registered an extended node to be migrated, in which the extended node to be migrated is an extended node with a remaining storage space greater than or equal to a storage space corresponding to the target state tree;
if the master node currently does not register an extended node to be migrated, then registering an extended node in the master node; and
updating information of the registered extended node in the data mapping table.

A second aspect of the present application provides a method for data migration of a blockchain, applied to an extended node device, and including:
receiving state data of a target state tree from a master node; the target state tree is determined by the master node from a state tree that has been generated, and the master node is configured to segment the state data in the blockchain according to a preset time interval; generating one state tree based on the state data within one time interval, wherein each state tree is organized in a chronological order, and the state tree is a multi-version Merkle tree organized based on a time structure;
performing data verification on the target state tree;
if the target state tree verification passes, reconstructing the target state tree in the extended node based on the state data, in which the target state tree is a B+ tree based on a copy-on-write technology, and each leaf node of the target state tree is used for the state data; and
returning migration completion information to the master node, in which the master node is configured to update a data mapping table stored in the master node according to the migration completion information and delete the state data of the target state tree, and the data mapping table is configured to represent a mapping relationship between state data stored in the extended node and the extended node.

In one possible implementation, after reconstructing the target state tree in the extended node based on the state data, the method further includes:
updating a global Bloom filter of the extended node; and
sending the updated global Bloom filter to the master node.
In one possible implementation, the method further includes:
receiving a query request from the master node;
determining data to be returned from a stored state tree based on the query request and the local Bloom filters in the extended node, in which each state tree in the extended node has one corresponding local Bloom filter configured to query data in the corresponding state tree; and
sending the data to be returned to the master node.

A third aspect of the present application provides a device for data migration of blockchain, applied to a master node device of the blockchain, and the device includes:
a generation module, configured for generating a state tree based on state data of accounts in the blockchain, in which the state tree is a B+ tree based on a copy-on-write technology, and each leaf node of the state tree is configured to store the state data;
a determination module, configured for determining a target state tree to be migrated from the generated state tree when data migration is triggered;
a sending module, configured for sending state data of the target state tree to an extended node of a master node;
an update module, configured for updating a data mapping table stored in the master node, if migration completion information is received from the extended node; in which the data mapping table is configured to represent a mapping relationship between state data stored in the extended node and the extended node; and
a deletion module, configured for deleting the target state tree in the master node.

A fourth aspect of the present application provides a device for data migration of blockchain applied to an extended node device, the device includes:
a receiving module, configured for receiving state data of a target state tree from a master node; the target state tree is a B+ tree based on a copy-on-write technology, and each leaf node of the target state tree is configured to store state data of accounts in the blockchain;
a verification module, configured for performing data verification on the target state tree;
a reconstruction module, configured for reconstructing the target state tree in the extended node based on the state data if the target state tree verification passes;
a sending module, configured for returning migration completion information to the master node, wherein the master node is configured to update a data mapping table stored in the master node according to the migration completion information and delete the state data of the target state tree, and the data mapping table is configured to represent a mapping relationship between state data stored in the extended node and the extended node.

A fifth aspect of the present application provides a computer device, including a memory, a processor, and a computer program stored in the memory and executable on the processor. The processor, when executing the computer program, implements the method described in the first or second aspect above.

A sixth aspect of the present application provides a computer-readable storage medium storing a computer program. The computer program, when executed by a processor, implements the method described in the first or second aspect above.

A seventh aspect of the present application provides a computer program product, which, when run on a computer device, causes the computer device to execute the method described in the first or second aspect above.

Compared with the prior art, the embodiments of the present application include the following advantages:
In the embodiments of the present application, the state data of the blockchain can be organized into a state tree for storage. The state tree is a B+ tree based on a copy-on-write technology. In this state tree, all data of the account state are stored, that is, when updating data, historical data is not merged and modified, but new state data is recorded, full-version storage of state data is realized. When data migration is triggered, the master node can determine the target state tree to be migrated. Extended nodes can be registered on the master node, and these extended nodes can serve as storage space for the master node. Therefore, the master node can send the data of the target state tree to the extended nodes of the master node, thereby migrating the state data from the master node to the extended nodes and reducing the storage pressure on the master node.

### DESCRIPTION OF THE DRAWINGS

In order to more clearly illustrate the technical solutions in the embodiments of the present application, the accompanying drawings used in the description of the embodiments or the prior art will be briefly introduced below.
FIG. 1 is a flowchart illustrating steps of a method for data migration of a blockchain provided in an embodiment of the present application;
FIG. 2 is a schematic diagram illustrating a state data storage method provided in an embodiment of the present application;
FIG. 3 is a flowchart illustrating steps of another method for data migration of a blockchain provided in an embodiment of the present application;
FIG. 4 is a flowchart illustrating steps of yet another method for data migration of a blockchain provided in an embodiment of the present application;
FIG. 5 is a flowchart illustrating steps of yet another method for data migration of a blockchain provided in an embodiment of the present application;
FIG. 6 is a flowchart illustrating steps of yet another method for data migration of a blockchain provided in an embodiment of the present application;
FIG. 7 is a flowchart illustrating steps of yet another method for data migration of a blockchain provided in an embodiment of the present application;
FIG. 8 is a schematic diagram illustrating a device for data migration of a blockchain provided in an embodiment of the present application;
FIG. 9 is a schematic diagram illustrating another device for data migration of a blockchain provided in an embodiment of the present application; and
FIG. 10 is a schematic diagram illustrating a computer device provided in an embodiment of the present application.

### DETAILED DESCRIPTION OF THE EMBODIMENTS

In the following description, specific details such as particular system architectures and technologies are set forth for illustrative purposes and not for limitation, in order to provide a thorough understanding of the embodiments of the present application. However, those skilled in the art will understand that the present application can also be implemented in other embodiments without these specific details. In other cases, detailed descriptions of well-known systems, devices, circuits, and methods are omitted so as not to obscure the description of the present application with unnecessary details.

Blockchain technology has been widely used in finance, healthcare, the Internet of Things, and other fields in recent years. However, with the continuous expansion of application scenarios, the data storage challenges faced by blockchain systems are becoming increasingly prominent, especially in the field of state data management and migration.

The data storage pressure of blockchain leads to a decline in read and write performance. As the amount of data on the blockchain system continues to grow, the underlying storage system faces performance bottlenecks when processing large amounts of data. The increase in read paths and the amplification effect during writing lead to a significant decline in read and write performance, thereby affecting the overall efficiency of the blockchain network.

Blockchain systems cannot handle infinitely growing data. Blockchain is essentially a system that continuously accumulates data. If expired or infrequently accessed data cannot be effectively optimized or migrated, the storage demands of the system will continuously expand, eventually exceeding hardware limitations and affecting the sustainable operation of the system .

Current blockchain storage solutions lack sufficient support for data migration. Current mainstream blockchain storage solutions are centered on Authentication Data Structures (ADS). While they can provide data integrity verification, they have the following shortcomings in data segmentation and migration efficiency. Authentication Data Structures organize data in a fixed tree structure. Although they support partial data access, when faced with scenarios requiring the segmentation of large amounts of data, due to their global nature and strong dependencies, the entire tree often needs to be reconstructed, resulting in low migration efficiency. Lexicographical sorting restricts segmentation strategies: existing state data storage solutions mostly sort account addresses lexicographically. While this sorting method is suitable for fast queries, it cannot segment data according to the time dimension, making it difficult to meet dynamic migration requirements. For example, when migrating by block or transaction time dimension, the byte order is inconsistent with the chronological order, which results in complex data segmentation logic and poor performance.

Based on this, embodiments of the present application provide a method for data migration of a blockchain, which provides an efficient and highly consistent state data migration scheme.

The technical solution of the present application will be described below through specific embodiments.

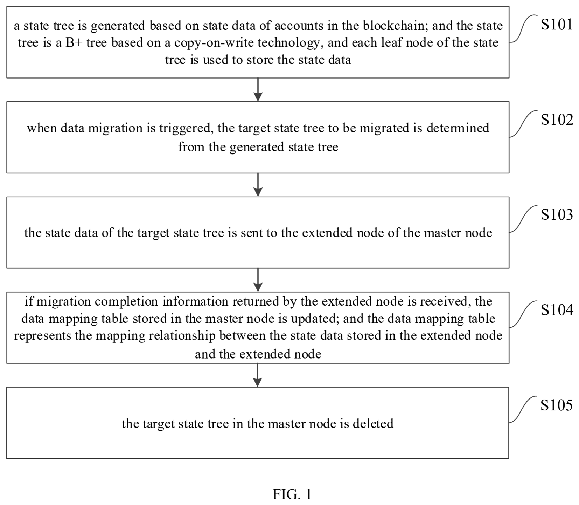

As shown in FIG. 1, a flowchart illustrating the steps of the method for data migration of a blockchain provided in this embodiment is shown, which may specifically include the following steps:

In a step S101, a state tree is generated based on state data of accounts in the blockchain; and the state tree is a B+ tree based on a copy-on-write technology, and each leaf node of the state tree is used to store the state data.

The execution entity of the embodiment can be a computer device, which can be a master node device of the blockchain , and a master node of blockchain is deployed in the computer device. The master node can be deployed on a server, a cloud server, or other devices. The computer device can be a server, a cloud server, or other devices. This embodiment does not limit the specific type of computer device.

The blockchain of the account model may include state data. The state data of an account in the blockchain refers to information stored in the blockchain network that reflects the current state of the account. The state data may include the account balance, number of transactions, and other relevant information to ensure the accuracy and consistency of the account state. The state data of an account in the blockchain is usually recorded in a pipeline manner. For example, after a transfer operation, the account balance will decrease or increase accordingly. State data ensures that each account on the blockchain has a clear and accurate balance record, thus preventing double-spending.

The state data of accounts in the blockchain can be maintained through a state tree. In this embodiment, the state tree may include leaf nodes, which store the corresponding state data, and nodes above the leaf nodes are used to store index information.

In the embodiment, the state data in blockchain nodes can be stored using a B+ tree based on a copy-on-write (CoW) technology. Based on the copy-on-write technology, when data in a node needs to be modified, the original node is not modified; instead, a new node is created to store the modified data, and the pointer of the parent node is copied and linked to the new node. The B+ tree based on the copy-on-write technology can achieve a single-layer multi-version storage architecture, avoiding the read/write amplification of a traditional two-layer model. Simultaneously, the B+ tree based on the copy-on-write technology supports the generation of Merkle proofs, thereby ensuring the consistency and integrity of the state data.

In the embodiment, the state tree can be a Time-Structure Multi-Version Merkle Tree (TSMM-tree) organized based on a time structure. This TSMM-tree can be combined with the B+ tree based on copy-on-write technology, so as to support efficient state data storage, segmentation, and migration operations.

The master node device can segment the state data of accounts in the blockchain according to a preset time interval; one state tree is generated based on the state data within one time interval, and the state trees are linked in a chronological order.

As an example, the master node device can generate independent state trees for the state data every N blocks. The state trees are organized in a chronological order, facilitating data management by time period during migration operations. Each state tree corresponds to one time period. As an example, each state tree can have unique identification information, which can also represent the chronological order of each state tree. For example, the first generated state tree can be TREE1, the second generated state tree can be TREE2, and the Nth generated state tree can be TREEN. 1, 2, and N can be used as unique identification information for the state tree. A smaller unique identification information indicates an older state tree, while a larger unique identification information indicates a newer state tree.

The time period information of the state tree can also be represented by block numbers. Block numbers can be generated in a chronological order, thus the block numbers can be used to represent time. The master node device can organize state data into a state tree for every 100 blocks. For example, blocks 1-100, 101-200, and 201-300 each correspond to a state tree. In this case, the size of the block numbers within the block range can represent the time information of the state tree.

In this embodiment, state data can be segmented based on chronological order, reducing the difficulty of data segmentation and allowing for flexible segmentation of state data. Organizing state data into a state tree in the chronological order and migrating data in units of state trees improves data migration efficiency. This embodiment innovatively proposes a time-structured storage and segmentation mechanism to address the complex dependencies of state data, enabling efficient and flexible data migration.

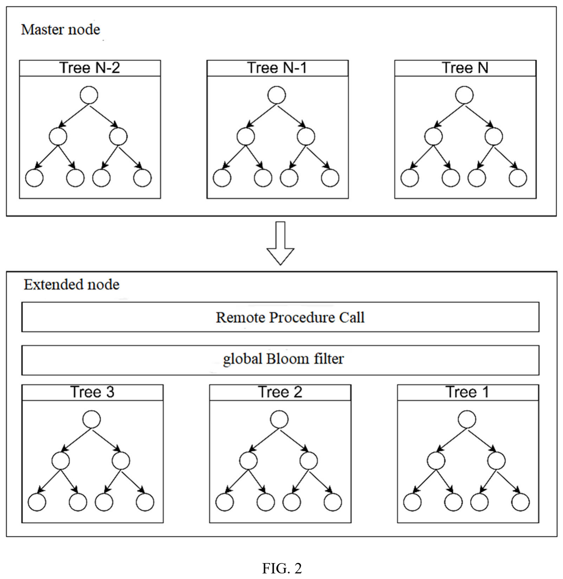

FIG. 2 is a schematic diagram of a state tree according to an embodiment of the present application. As shown in FIG. 2, each state tree can be labeled, and the state trees can be organized in the chronological order. State data in the master node and subsequent extended nodes can be organized using state trees. FIG. 2 shows the organization of state data in the master node and extended nodes of the blockchain. As shown in FIG. 2, the state trees in both the master node and extended nodes can be sorted in the chronological order. Each state tree can include leaf nodes, and the leaf nodes are used to store state data.

In a step S102, when data migration is triggered, the target state tree to be migrated is determined from the generated state tree.

The master node device can receive a data migration instruction. For example, the master node can receive a data migration instruction from a smart contract, at which point data migration can be triggered.

In another possible implementation, data migration can be triggered when the storage space of the master node device reaches a preset threshold.

The object of data migration can generally be historical state data. The master node device can determine the target state tree to be migrated from the generated state tree. For example, the master node device can determine the state tree ranked first among the existing state trees as the target state tree. That is, when selecting the target state tree, it can choose to select the earliest generated state tree according to chronological order, that is, the state tree furthest from the current time.

For example, the master node device can currently include three state trees, and the block ranges corresponding to the three state trees can be 1-100, 101-200, and 201-300. In this case, the state tree corresponding to the block range 1-100 can be used as the target state tree.

In a step S103, the state data of the target state tree is sent to the extended node of the master node.

The master node device can send the state data corresponding to the target state tree to the extended node. The target state tree can include the state data of multiple accounts. The extended node can be pre-registered in the master node. The extended node can be deployed on other computer devices and can be used as storage space for the master node. The master node can pre-register the extended nodes with the master node via Remote Procedure Call (RPC), allowing the master node to migrate data to the extended nodes.

In this embodiment, the extended nodes and the master node are deployed on different devices. The extended nodes are deployed on the extended node device, and the master node is deployed on the master node device. Through registration, the master node can obtain information such as the address and storage capacity of the extended nodes, facilitating data migration and communication between the master node and the extended nodes. The master node can store the extended node information in a data mapping table, thereby determining the target extended node based on the information in the data mapping table. The device where the target extended node is located is the device where the state data is stored after migration.

It is understood that the master node device and the extended node device are different devices, each with its own storage space. When the storage space of the master node device is under pressure, the state data stored in the master node device can be migrated to the extended node device. This allows the extended node device to store the state data of the master node, so as to reduce the storage pressure on the master node. After migrating the state data to the extended node device, the migrated state data can be deleted, thereby freeing up the storage space of the master node device, reducing the storage pressure of the master node device, and improving the data access efficiency of the master node device.

In one possible implementation, the remote server can deploy a remote call service. The master node can send an extended node request to the remote server, which can then return extended node information to the master node. This extended node information may include address, storage capacity, communication transmission method, etc of the extended node. The master node can receive this extended node information and record it in a data mapping table to register the extended node in the master node. As shown in FIG. 2, the extended node can deploy a remote call service, through which the extended node can be registered or deregistered in the master node.

During data migration, the master node device can invoke a remote service to send the state data of the target state tree to the extended node device. As an example, the master node device can use the Rsync service to send the target state tree data to the extended node device. Rsync is a high-efficiency data synchronization tool that supports incremental transmission and differential synchronization, used for state tree data transmission between the master node and extended nodes during data migration.

After the master node device sends the state data corresponding to the target state data to the extended node, the extended node can verify the received data. After successful verification, it reconstructs the state tree based on the state data corresponding to the target state data. After successful verification, the extended node can send migration completion information to the master node device. This migration completion information indicates that the extended node has received the state data corresponding to the target state data and reconstructed the target state tree.

In a step S104, if migration completion information returned by the extended node is received, the data mapping table stored in the master node is updated; and the data mapping table represents the mapping relationship between the state data stored in the extended node and the extended node.

After receiving the migration completion information, the master node device can update the data mapping table, thereby recording the extended node corresponding to the target state tree in the data mapping table.

When migrating state data to extended nodes, the master node can maintain a data mapping table. The data mapping table can record the position of each state tree, storage node information, data version range, etc., for data query and migration operations. Table 1 is a schematic diagram of a data mapping table provided in an embodiment of the present application.

**Table 1**

| | |
|---|---|
| Remote Service 1 | Tree range 1, BF1, info (alive, cap...) |
| Remote Service 2 | Tree range 2, BF2, info (alive, cap...) |
| Remote Service 3 | Tree range 3, BF3, info (alive, cap...) |

As shown in Table 1, the data mapping table records the mapping relationship between the master node device and the extended nodes, as well as information about each extended node, such as storage usage, version range, and availability status. For example, the remote service 1 in Table 1 can correspond to one extended node, the remote service 2 can correspond to one extended node, and the remote service 3 can correspond to one extended node. Tree range can be the range of state data stored by the extended node, BF can be a global Bloom filter, and info can include the status and storage space, etc. of the extended node.

In a step S105, the target state tree in the master node is deleted.

After updating the data mapping table, the state data of the target state tree in the master node can be deleted, thereby completing the migration of the target state tree from the master node to the extended node. Deleting the target state tree in the master node device can release the storage space in the master node device and reduce the storage pressure on the master node device.

In this embodiment, the state data is organized into multiple state tree units in chronological order. Each state tree unit can contain state data within a fixed range, and the multiple state tree units are organized in a chronological order. The state data is maintained based on a state tree allowing for flexible data segmentation, facilitating flexible data migration while ensuring efficient data access. In this embodiment, the state tree data is not merged or modified during data migration, so as to ensure the consistency of the entire network state in the blockchain and support other nodes to perform simple payment verification.

This embodiment can register extended nodes in the master node device, thereby expanding the storage space of the master node and reducing the storage pressure on the master node device.

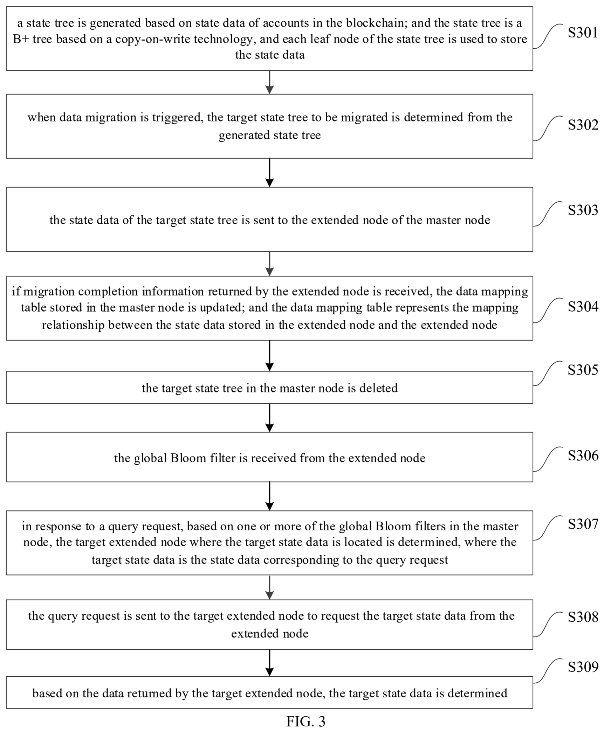

As shown in FIG. 3, a flowchart of another method for data migration of a blockchain provided in the present application embodiment is shown, which may include the following steps:

In a step S301, a state tree is generated based on state data of accounts in the blockchain; and the state tree is a B+ tree based on a copy-on-write technology, and each leaf node of the state tree is used to store the state data.

The execution entity of this embodiment can be the aforementioned master node device. The steps S301-S305 of this embodiment can refer to the steps S101-S105 of the previous embodiment, which will not be repeated here.

In a step S302, when data migration is triggered, the target state tree to be migrated is determined from the generated state tree.

In a step S303, the state data of the target state tree is sent to the extended node of the master node.

In a step S304, if migration completion information returned by the extended node is received, the data mapping table stored in the master node is updated; and the data mapping table represents the mapping relationship between the state data stored in the extended node and the extended node.

In one possible implementation, when the extended node returns migration completion information, it also sends the global Bloom filter of the extended node to the master node device. The master node device can update the global Bloom filter of the extended node in the data mapping table.

In a step S305, the target state tree in the master node is deleted.

In a stepS306, the global Bloom filter is received from the extended node.

A Bloom filter is a space-efficient data structure based on a hash function, which is used to quickly determine whether an element exists in a set.

One or more extended nodes can be registered in the master node device. Each extended node can maintain one global Bloom filter, which can be used to determine whether data exists in a certain extended node.

When data in an extended node is updated, the global Bloom filter of the extended node is also updated. Therefore, each time data migration is completed, the extended node can update the global Bloom filter and send the updated global Bloom filter to the master node device, so the master node device can include the global filters of each extended node.

In a step S307, in response to a query request, based on one or more of the global Bloom filters in the master node, the target extended node where the target state data is located is determined, where the target state data is the state data corresponding to the query request.

The master node device can receive query requests. For example, a smart contract can send a data query request to the master node device. The master node device can determine the target extended node where the target state data is located through the global Bloom filter corresponding to each extended node.

One or more target extended nodes can be included. In this embodiment, the state data is continuously updated, and each update is recorded in the state tree. Different versions of the target state data may exist in multiple state trees, each corresponding to a different time. Therefore, the state data can exist in multiple state trees, and the target extended node corresponding to the query request may include one or more.

In a S308, the query request is sent to the target extended node to request the target state data from the extended node.

After determining one or more target extended nodes, the master node device can send query requests to each target extended node. Each state tree in the target extended nodes can correspond to one local Bloom filter. Based on the local Bloom filter, the target extended node can determine the state tree where the target state data is located, and thus query the corresponding target state data from the corresponding state tree.

In a step S309, based on the data returned by the target extended node, the target state data is determined.

The master node device can receive one or more data from the target extended node. The master node device can determine the time information corresponding to each piece of data returned by the target extended node; based on the time information, the latest data is determined as the target state data.

As an example, the data returned by each target extended node has a corresponding first state tree; the block range corresponding to the first state tree can be determined from the data mapping table. The block range is represented by block numbers, which are generated according to the chronological order; the block range is used as the time information corresponding to the data returned by the target extended node. Then, the master node device can determine the latest data as the target state data based on the block range. For example, the block ranges corresponding to the state trees of the three data points returned by the target extended node can be 1-100, 101-200, and 201-300. In this case, the data in the state tree corresponding to block range 201-300 can be used as the target state data.

In this embodiment, when performing data queries, preliminary filtering can be performed using a global Bloom filter. The master node device can maintain global Bloom filters for each extended node, thereby quickly locating extended nodes that may contain the target state data. The extended nodes can further filter data using local Bloom filters. For the target extended node, the Bloom filters corresponding to each state tree can accurately locate the target state data. The queried data can include multiple data, and the master node device can return the latest data. Based on the two-layer Bloom filter architecture, the master node device in this embodiment can quickly locate the target state data. Based on the time-structured state tree, the master node device can determine the latest data, thereby responding to query requests based on the latest data.

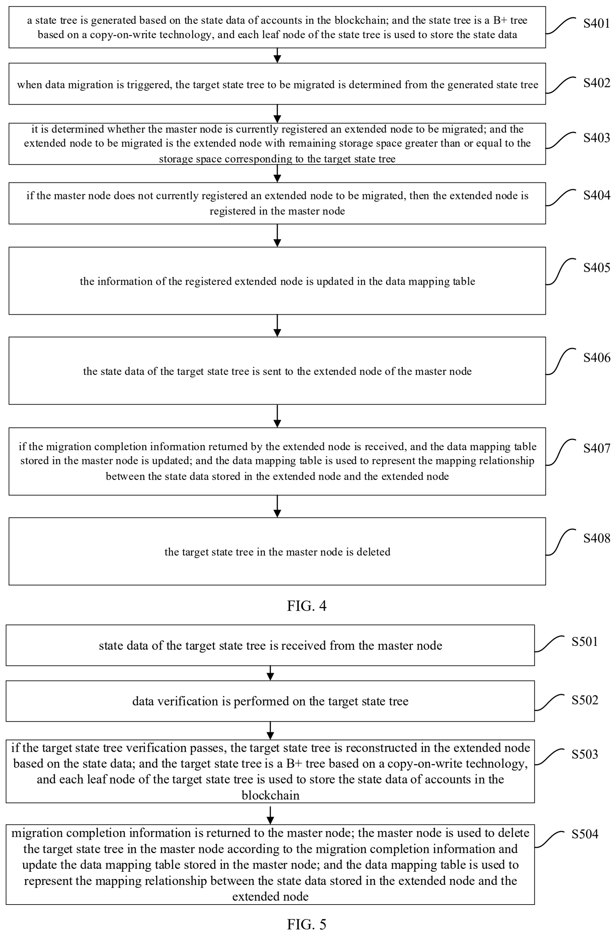

As shown in FIG. 4, a flowchart illustrating another method for data migration of a blockchain provided in this embodiment is shown, which may specifically include the following steps:

In a S401, a state tree is generated based on the state data of accounts in the blockchain; and the state tree is a B+ tree based on a copy-on-write technology, and each leaf node of the state tree is used to store the state data.

The execution entity of this embodiment can be the master node device described above. The steps S401-S402 of this embodiment can refer to the steps S101-S102 of the previous embodiment, and will not be repeated here.

In a S402, when data migration is triggered, the target state tree to be migrated is determined from the generated state tree.

In a S403, it is determined whether the master node is currently registered an extended node to be migrated; and the extended node to be migrated is the extended node with remaining storage space greater than or equal to the storage space corresponding to the target state tree.

The master node can register extended nodes in advance through remote call services. When the master node needs to migrate data or has insufficient storage space, it can register extended nodes. The extended nodes can dynamically join and register with the master node through remote service calls. The registration information of the extended nodes can be updated in the mapping table.

As an example, the master node device can first determine whether the data to be migrated can be migrated to the extended node, i.e., whether the remaining storage space of the extended node is greater than or equal to the storage space corresponding to the target state tree. The data mapping table can store the information of the extended node. Based on the data mapping table, the master node device can determine the remaining storage space of each extended node, thereby determining whether the migration can be performed.

In a step S404, if the master node does not currently registered an extended node to be migrated, then the extended node is registered in the master node.

If the remaining storage space of the extended nodes is less than the storage space corresponding to the target state tree, then the storage space is insufficient, and the extended node can be registered in the master node to expand the storage space.

In a step S405, the information of the registered extended node is updated in the data mapping table.

In a step S406, the state data of the target state tree is sent to the extended node of the master node.

The execution subject of this embodiment can be the master node device described above. The steps S406-S408 of this embodiment can be referenced in conjunction with the steps S103-S105 of the previous embodiment, which will not be repeated here.

The master node device can send the state data of the target state tree to the extended nodes newly registered by the master node.

In a step S407, if the migration completion information returned by the extended node is received, and the data mapping table stored in the master node is updated; and the data mapping table is used to represent the mapping relationship between the state data stored in the extended node and the extended node.

The global Bloom filter of the extended node can be updated in the data mapping table.

In a step S408, the target state tree in the master node is deleted.

The method in this embodiment can register extended nodes in the master node, thereby expanding the storage space of the master node device. The migration mechanism of this embodiment effectively alleviates the storage bottleneck of the master node, improves service performance, and retains the ability of the blockchain to trace historical data.

As shown in FIG. 5, a flowchart illustrating another method for data migration of a blockchain provided in this embodiment is shown, which may specifically include the following steps:

In a step S501, state data of the target state tree is received from the master node.

The execution subject of this embodiment is an extended node device. The extended node device can be a computer device with storage space, such as a personal computer, a server, etc. This embodiment does not limit the specific type of computer device.

In a step S502, data verification is performed on the target state tree.

Based on the verification information in the target state data, the various state data corresponding to the target state tree can be verified.

In a step S503, if the target state tree verification passes, the target state tree is reconstructed in the extended node based on the state data; and the target state tree is a B+ tree based on a copy-on-write technology, and each leaf node of the target state tree is used to store the state data of accounts in the blockchain.

The extended node device can reconstruct the target state tree in the extended node based on the state data of the target state tree. The same portion of state data is organized in the form of a state tree in both the master node and the extended node, thus facilitating data querying and tracing.

In a step S504, migration completion information is returned to the master node; the master node is used to delete the target state tree in the master node according to the migration completion information and update the data mapping table stored in the master node; and the data mapping table is used to represent the mapping relationship between the state data stored in the extended node and the extended node.

In this embodiment, the state data in the extended node can also be maintained in the form of a state tree, without data merging or deletion, thereby ensuring data consistency and facilitating data querying and tracing.

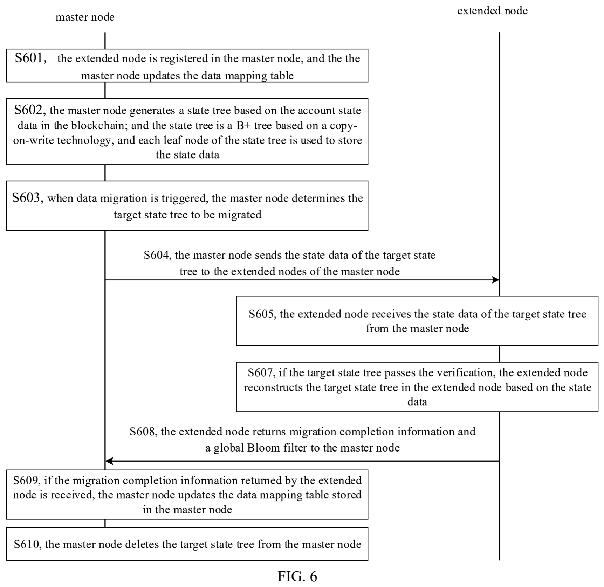

As shown in FIG. 6, a flowchart of another method for data migration of a blockchain provided in the present application embodiment is shown, which may specifically include the following steps:

In a step S601, the extended node is registered in the master node, and the the master node updates the data mapping table.

The steps S601-S610 in this embodiment can be referred to the above embodiments and which will not be repeated here.

In a step S602, the master node generates a state tree based on the account state data in the blockchain; and the state tree is a B+ tree based on a copy-on-write technology, and each leaf node of the state tree is used to store the state data.

In a step S603, when data migration is triggered, the master node determines the target state tree to be migrated.

In a step S604, the master node sends the state data of the target state tree to the extended nodes of the master node.

In a step S605, the extended node receives the state data of the target state tree from the master node.

In a step S606, the extended node performs data verification on the target state tree.

In a step S607, if the target state tree passes the verification, the extended node reconstructs the target state tree in the extended node based on the state data.

In a step S608, the extended node returns migration completion information and a global Bloom filter to the master node.

In a step S609, if the migration completion information returned by the extended node is received, the master node updates the data mapping table stored in the master node; and the data mapping table is used to represent the mapping relationship between the state data stored in the extended node and the extended node.

In a step S610, the master node deletes the target state tree from the master node.

In this embodiment, the master node device can migrate data to the extended node device and perform data query based on the Bloom filter. The method in this embodiment provides an efficient distributed data query mechanism. Through the dual filtering design of the global Bloom filter and the local Bloom filter of the extended node, the query performance is significantly optimized, and the data location overhead in the distributed scenario is reduced.

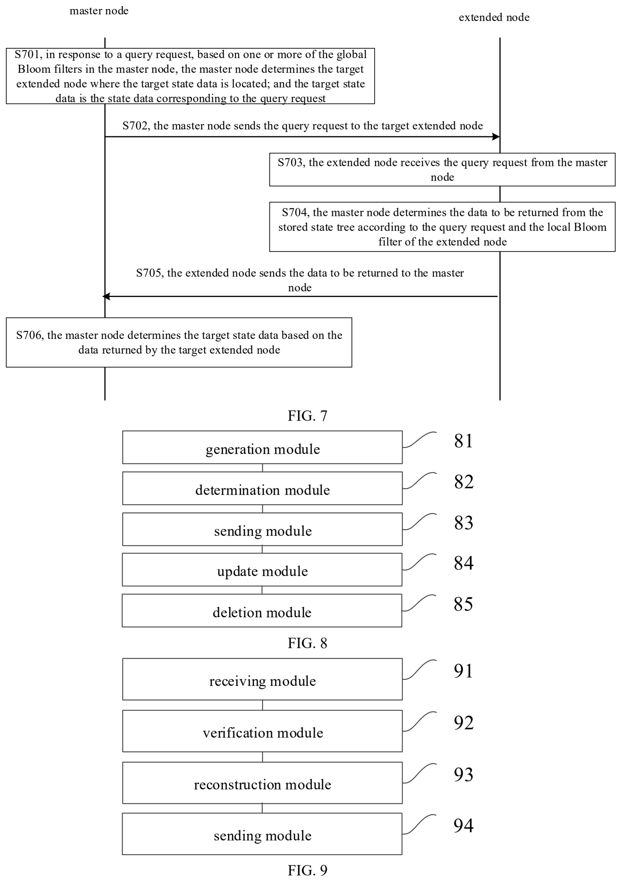

As shown in FIG. 7, a flowchart illustrating another method for data migration of a blockchain provided in the present application embodiment is shown, which may specifically include the following steps:

In a step S701, in response to a query request, based on one or more of the global Bloom filters in the master node, the master node determines the target extended node where the target state data is located; and the target state data is the state data corresponding to the query request.

The steps S601-S610 in this embodiment can be referred to the above embodiments and which will not be repeated here.

In a step S702, the master node sends the query request to the target extended node to request the target state data from the extended node.

In a step S703, the extended node receives the query request from the master node.

In a step S704, the master node determines the data to be returned from the stored state tree according to the query request and the local Bloom filter of the extended node.

In the extended nodes, each state tree can have one corresponding local Bloom filter. The local filter can be used to determine whether target state data exists in the state tree. After receiving a query request, the extended node can determine whether target state data exists in each state tree based on the local Bloom filter corresponding to each state tree.

If target state data exists in the target state tree, the extended node can retrieve the data to be returned from the target state tree.

In a step S705, the extended node sends the data to be returned to the master node.

In a step S706, the master node determines the target state data based on the data returned by the target extended node.

This embodiment adopts a dynamic extended node registration and migration mechanism, which can significantly reduce the storage pressure of the master node while retaining the traceability capability of historical data. During the data migration process, the migrated data is not modified or merged, thereby ensuring the consistency of state data across the entire network. The process design during the data migration process strictly guarantees the consistency and efficiency of data access. Dynamic horizontal extending is implemented: it supports the dynamic addition and removal of extended nodes, and flexible management of migration nodes is achieved through a mapping table. Horizontal extending capability is provided to adapt to data storage needs in different scenarios and meet the performance requirements of the system as data grows. Based on a state tree, a dynamic horizontal extending scheme for state data is proposed, effectively alleviating the storage pressure caused by continuous data growth. A collaborative working mechanism between the master node and the extended node is provided, combined with optimized design for data migration and querying, and the scalability and high performance of the system are ensured.

During the migration process, the data location and status are recorded through a mapping table, and a Bloom filter is used for rapid location, ensuring high consistency and high query efficiency of the migrated data. After data migration, the static nature of the migrated data is maintained, without merging or modification operations, and data version inconsistency issues is avoided.

It should be noted that the sequence number of each step in the above embodiments does not imply the order of execution. The execution order of each process should be determined by its function and internal logic, and should not constitute any limitation on the implementation process of the embodiments of the present application.

As shown in FIG. 8, a schematic diagram of a device for data migration of a blockchain provided in an embodiment of the present application is shown. This device is applied to a master node device of the blockchain and may specifically include a generation module 81, a determination module 82, a sending module 83, and an update module 84:

The generation module 81 is configured for generating a state tree based on state data of accounts in the blockchain, in which the state tree is a B+ tree based on a copy-on-write technology, and each leaf node of the state tree is configured to store the state data;

The determination module 82 is configured for determining a target state tree to be migrated from the generated state tree when data migration is triggered;

The sending module 83 is configured for sending state data of the target state tree to an extended node of a master node;

The update module 84 is configured for updating a data mapping table stored in the master node, if migration completion information is received from the extended node; in which the data mapping table is configured to represent a mapping relationship between state data stored in the extended node and the extended node;

A deletion module 85 is configured for deleting the target state tree in the master node.

In one possible implementation, one or more extended nodes are registered in the master node, and each extended node has a corresponding global Bloom filter in the master node. The device further includes:

A global Bloom filter receiving module, configured for receiving the global Bloom filter from the extended node;

A target extended node determining module, configured for, in response to a query request, determining the target extended node where the target state data is located based on one or more of the global Bloom filters in the master node. The target state data is the state data corresponding to the query request;

A query request sending module, configured for sending the query request to the target extended node to request the target state data from the extended node;

A target state data determination module, configured for determining the target state data based on the data returned by the target extended node.

In one possible implementation, the target state data determination module includes:
a time information determination sub-module, configured for determining the time information corresponding to each piece of data returned by the target extended node;
a target state data determination sub-module, configured for determining the latest data as the target state data based on the time information.
In one possible implementation, the time information determination sub-module includes:
a first state tree determination unit, configured for determining the first state tree corresponding to the data returned by the target extended node;
a block range determination unit, configured for determining the block range corresponding to the first state tree from the data mapping table; the block range is represented by block numbers, and the block numbers are generated according to chronological order;
a time information determination unit, configured for taking the block range as the time information corresponding to the data returned by the target extended node.

In one possible implementation, the device further includes:
a judging module, configured for determining whether an extended node to be migrated is currently registered in the master node; the extended node to be migrated is an extended node with a remaining storage space being greater than or equal to a storage space corresponding to the target state tree;
a registration module, configured for registering an extended node in the master node if the master node has not currently registered an extended node to be migrated;
a data mapping table updating module, configured for updating the information of the registered extended node in the data mapping table.

In one possible implementation, the generation module 81 includes:
a partitioning sub-module, configured for segmenting the state data in the blockchain according to a preset time interval;;
a generation sub-module, configured for generating one state tree based on the state data within one time interval, in which each state tree is organized in a chronological order.

As shown in FIG. 9, a schematic diagram of a device for data migration of a blockchain provided in an embodiment of the present application is shown. This device is applied to an extended node device and specifically may include: a receiving module 91, a verification module 92, a reconstruction module 93, and a sending module 94:

The receiving module 91 is configured for receiving state data of a target state tree from a master node. The target state tree is a B+ tree based on a copy-on-write technology, and each leaf node of the target state tree is used to store the state data of accounts in the blockchain;

The verification module 92 is configured for performing data verification on the target state tree;

The reconstruction module 93 is configured for reconstructing the target state tree in the extended node based on the state data if the target state tree verification passes;

The sending module 94 is configured for returning migration completion information to the master node, in which the master node is configured to update a data mapping table stored in the master node according to the migration completion information and delete the state data of the target state tree, and the data mapping table is configured to represent a mapping relationship between state data stored in the extended node and the extended node.

In one possible implementation, the device further includes:
a global Bloom filter update module, configured for updating a global Bloom filter of the extended node;
a global Bloom filter sending module, configured for sending the updated global Bloom filter to the master node.

In one possible implementation, the device further includes:
a query request receiving module, configured for receiving a query request from the master node;
a data determination module, configured for determining data to be returned from a stored state tree based on the query request and the local Bloom filters in the extended node, in which each state tree in the extended node has one corresponding local Bloom filter configured to query data in the corresponding state tree;
a return module, configured for sending the data to be returned to the master node.

For the device embodiment, since it is basically similar to the method embodiment, the description is relatively simple, and relevant details can be found in the description of the method embodiments.

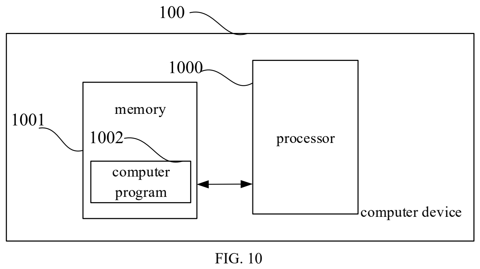

FIG. 10 is a schematic diagram of the structure of a computer device provided in an embodiment of the present application. As shown in FIG. 10, the computer device 100 of this embodiment includes: at least one processor 1000 (only one is shown in FIG. 10), a memory 1001, and a computer program 1002 stored in the memory 1001 and executable on the at least one processor 1000. When the processor 1000 executes the computer program 1002, it implements the steps in any of the above-described method embodiments.

The computer device 100 may be a desktop computer, a laptop, a handheld computer, or a cloud computing device, etc. The computer device may include, but is not limited to, a processor 1000 and a memory 1001. Those skilled in the art will understand that FIG. 10 is merely an example of the computer device 100 and does not constitute a limitation on the computer device 100. It may include more or fewer components than shown, or combine certain components, or different components, such as input/output devices, network access devices, etc.

The processor 1000 may be a Central Processing Unit (CPU), or it may be other general-purpose processors, Digital Signal Processors (DSPs), Application Specific Integrated Circuits (ASICs), Field-Programmable Gate Arrays (FPGAs), or other programmable logic devices, discrete gate or transistor logic devices, discrete hardware components, etc. A general-purpose processor may be a microprocessor or any conventional processor.

In some embodiments, the memory 1001 may be an internal storage unit of the computer device 100, such as a hard disk or memory of the computer device 100. In other embodiments, the memory 1001 may be an external storage device of the computer device 100, such as a plug-in hard disk, a Smart Media Card (SMC), a Secure Digital (SD) card, a Flash Card, etc., equipped on the computer device 100. Further, the memory 1001 may include both internal storage units and external storage devices of the computer device 100. The memory 1001 is used to store operating systems, applications, Boot Loaders, data, and other programs, such as the program code of the computer program. The memory 1001 can also be used to temporarily store data that has been output or will be output.

The present application embodiment also provides a computer-readable storage medium storing a computer program, which, when executed by a processor, implements the steps in the above-described method embodiments.

The present application embodiment provides a computer program product that, when run on a computer device, enables the computer device to implement the steps in the above-described method embodiments.

The above embodiments are only used to illustrate the technical solutions of the present application and are not intended to limit it. Although the present application has been described in detail with reference to the foregoing embodiments, those skilled in the art should understand that modifications can still be made to the technical solutions described in the foregoing embodiments, or equivalent substitutions can be made to some of the technical features; and such modifications or substitutions do not cause the essence of the corresponding technical solutions to deviate from the spirit and scope of the technical solutions of the embodiments of the present application, and should all be included within the protection scope of the present application.

## Claims

1. A method for data migration of a blockchain, applied to a master node device of the blockchain, and comprising:
generating a state tree based on state data of accounts in the blockchain, wherein the state tree is a B+ tree based on a copy-on-write technology, and each leaf node of the state tree is configured to store the state data;
determining a target state tree to be migrated from the generated state tree when data migration is triggered;
sending state data of the target state tree to an extended node of a master node;
if migration completion information is received from the extended node, updating a data mapping table stored in the master node, wherein the data mapping table is configured to represent a mapping relationship between state data stored in the extended node and the extended node; and
deleting the target state tree in the master node;
wherein, generating the state tree based on the state data of the accounts in the blockchain comprises:
segmenting the state data in the blockchain according to a preset time interval; and
generating one state tree based on the state data within one time interval, wherein each state tree is organized in a chronological order, and the state tree is a multi-version Merkle tree organized based on a time structure.

2. The method according to claim 1, wherein one or more of the extended nodes are registered in the master node, and each extended node has a corresponding global Bloom filter in the master node, and the method further comprises:
receiving the global Bloom filter from the extended node;
in response to a query request, determining a target extended node where the target state data is located based on one or more of the global Bloom filters in the master node, wherein the target state data is state data corresponding to the query request;
sending the query request to the target extended node to request the target state data from the extended node; and
determining the target state data based on data returned by the target extended node.

3. The method according to claim 2, wherein determining the target state data based on the data returned by the target extended node comprises:
determining time information corresponding to each piece of data returned by the target extended node; and
determining data with a latest time as the target state data based on the time information.

4. The method according to claim 3, wherein determining the time information corresponding to each piece of data returned by the target extended node comprises:
determining a first state tree corresponding to the data returned by the target extended node;
determining a block range corresponding to the first state tree from the data mapping table, wherein the block range is represented by block numbers generated in a chronological order; and
taking the block range as the time information corresponding to the data returned by the target extended node.

5. The method according to any one of claims 1-4, wherein before sending the target state tree to the extended nodes of the master node, the method further comprises:
determining whether the master node is currently registered an extended node to be migrated, wherein the extended node to be migrated is an extended node with a remaining storage space greater than or equal to a storage space corresponding to the target state tree;
if the master node currently does not register an extended node to be migrated, then registering an extended node in the master node; and
updating information of the registered extended node in the data mapping table.

6. A method for data migration of a blockchain, applied to an extended node device, and comprising:
receiving state data of a target state tree from a master node, wherein the target state tree is determined by the master node from a state tree that has been generated, and the master node is configured to segment the state data in the blockchain according to a preset time interval; generating one state tree based on the state data within one time interval, wherein each state tree is organized in a chronological order, and the state tree is a multi-version Merkle tree organized based on a time structure;
performing data verification on the target state tree;
if the target state tree verification passes, reconstructing the target state tree in the extended node based on the state data, wherein the target state tree is a B+ tree based on a copy-on-write technology, and each leaf node of the target state tree is used to store the state data; and
returning migration completion information to the master node, wherein the master node is configured to update a data mapping table stored in the master node according to the migration completion information and delete the state data of the target state tree, and the data mapping table is configured to represent a mapping relationship between state data stored in the extended node and the extended node.

7. The method of claim 6, wherein after reconstructing the target state tree in the extended node based on the state data, the method further comprises:
updating a global Bloom filter of the extended node; and
sending the updated global Bloom filter to the master node.

8. The method of claim 6 or 7, wherein the method further comprises:
receiving a query request from the master node;
determining data to be returned from a stored state tree based on the query request and a local Bloom filter in the extended node, wherein each state tree in the extended node has one corresponding local Bloom filter configured to query data in the corresponding state tree; and
sending the data to be returned to the master node.

9. A computer device, comprising a memory, a processor, and a computer program stored in the memory and executable on the processor, wherein the processor, when executing the computer program, implements the method of any one of claims 1-8.

10. A computer program product, wherein when the computer program product is run on a computer device, the computer device performs the method of any one of claims 1-8.
